(19) Europäisches Patentamt
European Patent Office
Office européen des brevets

(11) **EP 3 599 075 A1**

(12) **EUROPÄISCHE PATENTANMELDUNG**

(43) Veröffentlichungstag:
**29.01.2020 Patentblatt 2020/05**

(51) Int Cl.:
***B29C 64/00*** *(2017.01)* ***B01J 19/24*** *(2006.01)*

(21) Anmeldenummer: **18186079.2**

(22) Anmeldetag: **27.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Kiener, Christoph
81369 München (DE)**

(54) **REAKTOR ZUR DURCHFÜHRUNG EINER CHEMISCHEN GLEICHGEWICHTSREAKTION**

(57)     Die Erfindung betrifft einen Reaktor (11) zur Durchführung einer chemischen Gleichgewichtsreaktion. In dem Reaktor werden zu diesem Zweck mindestens zwei gasförmige Edukte eingeleitet und ein gasförmiges Produkt ausgeleitet. Zur Reaktion steht ein Druckbehälter zur Verfügung, wobei in dem Reaktionsraum (12) ein Katalysator angeordnet ist (vorzugsweise in einer Schüttung). Trennwände (22) im Reaktor stellen gekühlte Kondensationsflächen (23) zur Verfügung. Erfindungsgemäß ist der überwiegende Teil des Druckbehälters und die Kühlkanalstruktur in den Trennwänden bzw. in einer Außenwand (24) des Reaktors in einem Stück ausgeführt. Die Herstellung ist vorteilhaft durch ein additives Fertigungsverfahren beispielsweise durch Laserschmelzen möglich. Die Herstellung in einem Stück, vorzugsweise durch ein additives Fertigungsverfahren, ermöglicht vorteilhaft die Realisierung kompakter und kleiner Bauformen, so dass sich auch Reaktoren für geringere Durchsatzmengen kostengünstig herstellen lassen. Dies ermöglicht eine dezentrale Durchführung der Reaktionen beispielsweise während eines Überangebots regenerativer Energien.

FIG 1

EP 3 599 075 A1

**Beschreibung**

Die Erfindung betrifft einen Reaktor zur Durchführung einer chemischen Gleichgewichtsreaktion zwischen mindestens zwei gasförmigen Edukten und mindestens einem gasförmigen Produkt. Dieser Reaktor weist einen Druckbehälter auf, in dem ein Reaktionsraum mit einem Einlass für die Edukte und einem ersten Auslass für die Produkte vorgesehen ist. In dem Reaktionsraum ist ein katalytisches Material angeordnet. In dem Reaktionsraum ist außerdem mindestens eine Kondensationsfläche für das mindestens eine Produkt vorgesehen. Die Kondensationsfläche wird durch eine Kühlkanalstruktur gekühlt.

Chemische Gleichgewichtsreaktionen, die katalytisch unterstützt werden, ergeben häufig Produkte, die bei anderer Temperatur kondensieren, als die Edukte (partialdruckabhängiger Taupunkt). Beispiele für solche Gleichgewichtsreaktionen ist zum Beispiel die Methanolbildung aus Kohlenmonoxid und Wasserstoff bzw. aus Kohlendioxid und Wasserstoff, die Ammoniakbildung aus Wasserstoff und Stickstoff, die Dimethyletherbildung aus Methanol bzw. aus Gemischen, bestehend aus Kohlenmonoxid, Kohlendioxid und Wasserstoff, die Bildung von Kohlenwasserstoffkraftstoffen aus Dimethylether oder die Fischer-Tropsch-Synthese aus Wasserstoff und Kohlenmonoxid.

Die genannten Reaktionen sind im Allgemeinen exotherm und laufen unter Volumenverminderung ab. Die Lage des chemischen Gleichgewichtes und damit die maximal mögliche Konzentration der Produkte ist wegen des Prinzips des kleinsten Zwang (Le Chatelier) dann für die Produkte am günstigsten, wenn die Reaktion bei hohem Druck, niedriger Temperatur, einer hohen Konzentration der Edukte und einer niedrigen Gasphasenkonzentration der Reaktionsprodukte (oder des einen Reaktionsproduktes) abläuft.

Eine Möglichkeit, die Reaktion günstig zu beeinflussen, ist gemäß der WO 2009/106232 A1 beschrieben. Danach ist der Reaktionsraum so ausgestaltet, dass eine Gleichgewichtsreaktion zur Herstellung von Methanol durchgeführt werden kann. Während der Reaktion wird Methanol kondensiert, um dieses aus dem Reaktionsprozess entnehmen zu können. Dies verschiebt das Reaktionsgleichgewicht in günstiger Richtung. Um das Methanol auskondensieren zu können, ist es erforderlich, dass eine möglichst große Kondensationsfläche zur Verfügung steht. Dies bewirkt jedoch einen vergleichsweise komplexen geometrischen Aufbau des verwendeten Reaktors. Dieser ist daher teuer in seiner Herstellung.

Die Aufgabe der Erfindung besteht darin, einen Reaktor anzugeben, der bei einer ausreichend hohen aber konstanten isothermen Temperatur sowie bei möglichst hohem Reaktionsdruck die Synthese von bei diesen Bedingungen gasförmig vorliegenden Reaktionsprodukten aus gasförmigen Edukten ermöglicht, wobei der Reaktor kompakt und kostengünstig in der Herstellung sein soll.

Diese Aufgabe wird mit dem eingangs angegebenen Reaktor erfindungsgemäß dadurch gelöst, dass der überwiegende Teil des Druckbehälters und die Kanalstruktur in einem Stück ausgeführt sind. Hierdurch ergibt sich vorteilhaft eine besonders kompakte Bauform des Reaktors. Dieser kann bspw. durch ein additives Fertigungsverfahren wie dem selektiven Laserschmelzen in einem Stück hergestellt werden. Um eine unproblematische Befüllung mit den Katalysatorpartikeln zu gewährleisten, ist es sinnvoll, dass der Druckbehälter mit einem Deckel ausgeführt wird. Dieser Deckel ergibt ein zweites Bauteil, wobei jedoch der überwiegende Teil, nämlich der restliche Teil des Druckbehälters aus einem Stück gefertigt sein kann. In einem weiteren Ausführungsbeispiel kann der Katalysator auch durch eine rohrförmige Zuführung eingefüllt werden, die mit einer Verschraubung mit Blindstopfen als Deckel verschlossen wird. Ein Druckbehälter muss vorgesehen werden, damit die Reaktion mit einem Überdruck durchgeführt werden kann. Wie bereits erwähnt, lässt sich hierdurch das Reaktionsgleichgewicht günstig in Richtung der zur erzeugenden gasförmigen Produkte verschieben. Die Ausführung in einem Stück gemäß der Erfindung soll bedeuten, dass die Baustruktur, die den überwiegenden Teil des Druckbehälters, vorzugsweise den gesamtem Druckbehälter, bildet, monolithisch ausgeführt ist. Dies bedeutet, dass sich das einstückige Gehäuseteil des Druckbehälters nicht in einzelne Teile zerlegen lässt, ohne die Struktur zu zerstören. Vorzugsweise ist der Druckbehälter, bzw. dessen überwiegender Teil, nicht nur einstückig ausgeführt, sondern auch einstückig hergestellt, das heißt, das bereits während der Herstellung das eine Stück entsteht. Hierbei handelt es sich mit anderen Worten um ein urformtechnisches Verfahren. Da es sich bei dem Reaktor um ein geometrisch sehr komplexes Gebilde aus Kanälen handelt, ist eine solche urformtechnische Herstellung nicht durch klassische Verfahren wie dem Gießen zu erzeugen. Vielmehr muss vorteilhaft ein Verfahren zum additiven Herstellen der Struktur zum Einsatz kommen.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial kann beispielsweise pulverförmig oder flüssig sein, wobei durch das additive Fertigungsverfahren das Material zur Herstellung des Bauteils chemisch oder physikalisch verfestigt wird.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten eines herzustellenden Werkstücks umgewandelt, damit in der Fertigungsanlage die geeigneten Prozessschritte zur sukzessiven Herstellung dieses Werkstücks ablaufen können. Die Daten werden dafür so aufbereitet, dass die geometrischen Daten für die jeweils herzustellenden Lagen (Slices) des Werkstücks zur Verfügung stehen, was auch als Slicen bezeichnet wird. Das Werkstück kann eine vom Bauteil abweichende Gestalt haben. Beispielsweise kann ein herstellungsbedingter Bauteilverzug berücksichtigt werden, der durch eine abweichende Werkstückgeometrie kompensiert wird. Auch weist das Werkstück gewöhnlich Stützstrukturen auf, die bei einer Nachbearbeitung des Bauteils wieder entfernt werden müssen.

Als Beispiele für das additive Fertigen können das selektive Lasersintern (auch SLS für Selective Laser Sintering), das Selektive Laserschmelzen (auch SLM für Slective Laser Melting), das Elektronenstrahlschmelzen (auch EBM für Electron Beam Melting), das Laserpulverauftragsschweißen (auch LMD für Laser Metal Deposition), und Metall-Sinterverfahren (Verfestigen, Entbindern und Sintern, auch BJ für Binder Jetting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS, EBM und BJ werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die mit bereits verfestigten Bereichen des Bauteils verbunden wird. Dies geschieht durch eine Energiequelle (Laser oder Elektronenstrahl), wobei in denjenigen Bereichen lokal aufgeschmolzen oder gesintert wird, in denen das Bauteil entstehen soll, oder durch Verfestigen von Pulverpartikeln mit einem ortsgenau aufgebrachten Klebe- oder Bindemittel das Bauteil entstehen soll. So wird das Bauteil sukzessive lagenweise erzeugt und kann nach Fertigstellung dem Pulverbett entnommen werden.

Beim LMD werden die Pulverteilchen direkt der Oberfläche zugeführt, auf der ein Materialauftrag erfolgen soll. Beim LMD werden die Pulverpartikel durch einen Laser direkt in der Auftreffstelle auf der Oberfläche aufgeschmolzen und bilden dabei eine Lage des zu erzeugenden Bauteils.

SLS hat das Merkmal, dass die Pulverteilchen bei diesen Verfahren nicht vollständig aufgeschmolzen werden Beim SLS wird bei Wahl der Sintertemperatur darauf geachtet, dass diese unterhalb der Schmelztemperatur der Pulverpartikel liegt. Demgegenüber liegt beim SLM, EBM und LMD der Energieeintrag betragsmäßig bewusst so hoch, dass die Pulverpartikel vollständig aufgeschmolzen werden.

BJ hat das Merkmal, dass die Pulverteilchen zunächst nur mit geringer Festigkeit miteinander verklebt sind. Das entstandene räumliche Objekt muss vom losen Pulver gereinigt und in einem thermischen Entbinderungs- und Sinterverfahren verfestigt werden.

Demgemäß kann ein Reaktor vorteilhaft durch ein Verfahren hergestellt werden, wobei mit diesem Verfahren die oben genannte Aufgabe gelöst wird. Bei dem Verfahren wird der Reaktor zur Durchführung einer chemischen Gleichgewichtsreaktion zwischen mindestens zwei gasförmigen Edukten und mindestens einem gasförmigen Produkt dadurch hergestellt, dass der Druckbehälter in einem Stück erzeugt wird. Vorzugsweise wird hier ein additives Fertigungsverfahren verwendet. Dabei wird der Reaktionsraum mit einer Kondensationsfläche für das mindestens eine Produkt hergestellt. Außerdem wird eine Kühlkammerstruktur hergestellt, mit der die Kondensationsfläche gekühlt werden kann. Der Reaktor weist einen Druckbehälter auf, der zumindest zum überwiegenden Teil durch das additive Fertigungsverfahren hergestellt wird. Der Druckbehälter bildet einen Reaktionsraum, bei dem ein Einlass für die Edukte und ein erster Auslass für die Produkte hergestellt wird. Der so ausgeführte Reaktor weist die bereits angegebenen Vorteile auf. In einem weiteren Verfahrensschritt kann gemäß einer Ausgestaltung der Erfindung der Reaktionsraum mit einem katalytischen Material befüllt werden. Ist der Reaktionsraum nur überwiegend mit dem additiven Fertigungsverfahren hergestellt worden, so dass eine größere Öffnung zum Befüllen mit dem Katalysatormaterial ausgebildet ist, so kann diese Öffnung anschließend mit einem geeigneten Deckel verschlossen werden.

Auf wesentliche Details des Reaktors soll im Folgenden näher eingegangen werden.

Der Katalysator im Reaktionsraum kann beispielsweise als Schüttung ausgeführt sein. Diese Schüttung besteht vorzugsweise aus Partikeln von ungefähr einem Millimeter Durchmesser. Das Material des Katalysators muss in geeigneter Weise für die durchzuführende chemische Gleichgewichtsreaktion ausgewählt werden. Die für die durchzuführenden Gleichgewichtsreaktionen geeigneten Katalysatoren sind an sich bekannt und können daher anwendungsfallbezogen ausgewählt werden. Die Kühlkammerstruktur ist vorteilhaft in die Wandungen des Reaktionsraums integriert. Dort findet ohnehin die Gleichgewichtsreaktion statt. So kann bereits am Ort der Entstehung der Reaktionsprodukte eine Kondensation derselben erfolgen, so dass diese aus dem Reaktor ausgetragen werden können. Dies verschiebt das Reaktionsgleichgewicht, so dass mehr vom Reaktionsprodukt aus den Reaktionsedukten hergestellt werden kann. Die Kondensationsfläche ist in geeigneter Weise mit einem ersten Ausgang verbunden, so dass das Kondensat durch den Ausgang aus dem Reaktor ausgetragen werden kann. Der erste Ausgang ist vorteilhaft an einem geodätisch tief gelegenen Punkt des Reaktors vorgesehen, da das Kondensat aufgrund der Schwerkraft nach unten fließt und dort ohne Hilfsmittel aus dem Reaktor ausgetragen werden kann. Hierbei wird der Austrag überdies durch den im Reaktionsraum herrschenden Überdruck unterstützt.

Insgesamt ist es erfindungsgemäß möglich, einen Reaktor mit vergleichsweise geringer Baugröße in kompakter Bauform zur Verfügung zu stellen. Anders als bei Reaktoren, die aus einer Vielzahl von einzelnen Bauteilen zusammengesetzt werden, ist die Herstellung in einem Stück insbesondere durch ein additives Fertigungsverfahren auch wirtschaftlich, wenn kompakte Reaktoren mit kleiner Baugröße hergestellt werden. Solche Reaktoren können insbesondere bei Beteiligung von Wasserstoff in der durchgeführten Gleichgewichtsreaktion verwendet werden, um sogenannte Power-to-X-Anwendungen zu unterstützen. Hierbei handelt es sich um Anwendungen, die überschüssige elektrische Energie aus der regenerativen Energieerzeugung nutzen, um in einer zirkulären Wirschaft mit minimaler Verwendung fossiler Rohstoffe wertvolle Reaktionsprodukte zu erzeugen. Kleine Reaktoren lassen sich vorteilhaft schnell anwärmen bzw. abkühlen und können auch fluktuierend betrieben werden, sofern ein stabiler Ruhezustand zwischen den Betriebsphasen eingehalten wird. Solche kleinen Power-to-X-Anlagen könnten daher auch dezentral aufgestellt werden und sind attraktiv, um mit einer flexiblen Betriebsweise auf Schwankungen im Energienetz zu reagieren. Die überschüssige elektrische Leistung kann dann abgerufen werden, um hochwertige lager- und transportfähige Chemikalien zu erzeugen und zu speichern, so dass deren Verwendung ohne $CO_2$-Emissionen stattfinden kann. Bei verschiedenen Gleichgewichtsreaktionen wird sogar $CO_2$ aus der Atmosphäre gebunden, so dass sich sogar eine positive $CO_2$-Bilanz ergibt.

Auch in der chemischen Industrie ist ein Interesse an kleineren Anlagen vorhanden. Chemische Produkte müssen dann nicht mehr an einem zentralen Platz in einer großen Anlage hergestellt werden, wodurch sich vorteilhaft das Investitionsrisiko vermindern lässt. Außerdem entfallen weitere Transportwege, die bei Chemikalien wegen der Sicherheitsstandards mit erhöhten Kosten verbunden sind. Auf eine Steigerung des Bedarfs kann flexibel reagiert werden, indem eine Vielzahl der kleinen Anlagen installiert wird. Da diese kostengünstig in der Herstellung sind, können die Investitionen über einen längeren Zeitraum verteilt werden, ohne diejenigen einer Anschaffung einer großen Anlage zu übersteigen.

Ein weiterer Vorteil der Verwendung kleiner Anlagen liegt darin, dass diese einen geringeren Aufwand für eine druckfeste Herstellung erzeugen. Kompaktere Reaktoren sind im Verhältnis zum entstehenden Druck einfacher stabil auszuführen. Insbesondere, wenn die im Inneren des Reaktors verlaufenden Kanalstrukturen monolithisch hergestellt sind, ist es möglich, diese Kanäle zur zusätzlichen Stabilisierung des gesamten Reaktors zu verwenden. Der Materialbedarf, der für eine druckfeste Herstellung des Druckbehälters notwendig ist, ist daher verhältnismäßig gering.

Gemäß einer vorteilhaften Ausgestaltung der Erfindung ist vorgesehen, dass der Reaktionsraum als Reaktionskanal ausgeführt ist, der zwischen Trennwänden gefaltet oder spiralförmig in dem Druckbehälter verläuft. Dabei erstreckt sich der Querschnitt des Reaktionskanals zwischen gegenüberliegenden Stirnseiten. Mit anderen Worten ist die Form des Reaktionsraumes so ausgeführt, dass dieser zwei gegenüberliegende Stirnseiten aufweist, welche durch eine Mantelfläche miteinander verbunden sind. Der Querschnitt des Reaktionskanals verläuft somit über die gesamte Höhe des Reaktionsraums von Stirnseite zu Stirnseite. Dabei kann der Reaktionskanal entweder spiralförmig verlaufen oder beispielsweise im Reaktionsraum mäandern. Dadurch wird sichergestellt, dass die Reaktionsgase (das heißt, die Edukte und Produkte) durch den Reaktionsraum zwangsgeführt werden. Außerdem stellt der Reaktionskanal genügend große Flächen zur Kondensation der Produkte zur Verfügung. Durch den spiralförmigen bzw. gefalteten Verlauf des Reaktionskanals wird überdies eine außerordentliche kompakte Bauform des Reaktors ermöglicht. Die Herstellung insbesondere durch additive Fertigung ermöglicht es, die durch den gefalteten oder spiralförmigen Verlauf des Reaktionskanals entstehenden komplexen geometrischen Strukturen einfach herzustellen. Beim additiven Fertigen ist im Gegenteil eine kompakte Bauform vorteilhaft, da diese den begrenzten Bauraum der additiven Fertigungsanlagen optimal nutzt. Bei einem spiralförmigen Verlauf des Reaktionskanals ist die Herstellung des Reaktionsraums in Zylinderform besonders vorteilhaft. Wenn der Reaktionskanal gefaltet ist, ist vorteilhaft eine quaderförmige Gestalt des Reaktionsraums besonders sinnvoll.

Gemäß einer anderen Ausgestaltung der Erfindung ist vorgesehen, dass Strömungshindernisse in dem Reaktionskanal ausgebildet sind, die abwechselnd von der einen und der anderen Stirnseite des Druckbehälters in den Reaktionskanal hineinragen. Durch die Strömungshindernisse, die vorzugsweise durch Wände ausgebildet sind, wird eine weitere Zwangsführung der Reaktionsgase ermöglicht. Innerhalb des Reaktionskanals können diese dann geleitet werden, beispielsweise ist es möglich, dass die Strömungshindernisse abwechselnd von der einen Stirnseite und der anderen Stirnseite in den Reaktionskanal hineinragen. Dadurch müssen die Reaktionsgase abwechselnd zwischen der einen Stirnseite und der anderen Stirnseite hin und her fließen. Vorteilhaft können auch die Strömungshindernisse gekühlt werden, um zusätzliche Kondensationsflächen zur Verfügung zu stellen.

Gemäß einer besonders vorteilhaften Ausbildung der Erfindung ist vorgesehen, dass die Kühlkanalstruktur in den Trennwänden verläuft. Die Trennwände stellen vorteilhaft bauartbedingt bereits einen großen Teil der Fläche des kanalförmigen Reaktionsraums zur Verfügung. Wenn diese genutzt werden, um an der Oberfläche derselben das Kondensat des Reaktionsproduktes zu sammeln, werden diese in einer Doppelfunktion genutzt. Die Kühlung der Trennwände ermöglicht eine gleichmäßige Abfuhr von Wärme. Dies ist erforderlich, damit das Temperaturniveau in dem Reaktor bei Ablaufen einer exothermen Reaktion konstant gehalten werden kann.

Gemäß einer weitere Ausgestaltung der Erfindung kann vorgesehen werden, dass die Kondensationsfläche porös ausgebildet ist. Hierdurch entstehen kapillare Kanäle, die eine Kondensation vorteilhaft unterstützen. Beispielsweise kann die gekühlte Wand des spiralförmigen oder gefalteten Reaktionskanals an der dem Reaktionskanal zugewandten Fläche mit einem porösen Metall belegt sein. Reaktionstechnisch kann eine hohe Konzentration bzw. ein hoher Partialdruck des Reaktionsprodukts erreicht werden, da bei niedrigst möglicher Temperatur und hohem Druck gearbeitet wird. Das Reaktionsgas berührt dann die metallische Kapillarstruktur der Isothermenkühlwände, bestehend aus der Kapillarstruktur. Dabei kondensiert aufgrund des erreichten Taupunkts das Reaktionsprodukt am kälteren porösen Metall. Hierdurch wird das chemische Gleichgewicht der Reaktion verschoben und es entsteht weiteres Reaktionsprodukt mit dem Vorteil einer besseren Ausbeute. Die Kapillaren im porösen Material können Kanäle mit Kanaldurchmessern im Bereich von 10 bis 1000 $\mu$m, bevorzugt 30 bis 400 $\mu$m und besonders bevorzugt 50 bis 250 $\mu$m aufweisen. Die Kapillaren unterstützen die Kondensation durch die niedrigen Abstände zu den Wänden. Dabei findet eine gute Wärmeleitung in der vorzugsweise metallischen Wand statt, wobei die Wärme durch ein erstes Kühlmittel im Inneren der Wand abgeführt wird.

Die Porosität kann so ausgebildet sein, dass sie durch eine geeignete Belichtungsstrategie beispielsweise mittels selektivem Laserschmelzen (SLM) oder selektivem Lasersintern (SLS) hergestellt werden kann. Die Poren können dabei durch eine definierte Belichtungsstrategie erhalten werden. Einerseits ist es möglich, die Porosität durch SLS, d. h. durch einen im Vergleich zum SLM verringerten vollflächigen Energieeintrag, herzustellen. Dabei versintern die Pulverpartikel miteinander, wobei zwischen den Pulverpartikeln Zwischenräume verbleiben. Andererseits kann, wenn die Zwischenräume zwischen den Pulverpartikeln bei Durchführung eines SLS keine genügende Porosität hervorrufen, auch eine Belichtungsstrategie gewählt werden, bei der die Oberfläche des Pulverbetts nur partiell durch SLM belichtet wird, so dass einzelne Pulverpartikel unbelichtet bleiben und später aus dem Werkstück entfernt werden können. Die Porenbildung kann durch eine statistisch verteilte, unvollständige Belichtung des Pulverbetts erzeugt werden, wobei der Verlauf der Poren bzw. der belichteten Region der jeweiligen Pulverlagen zufällig ist. Nach einer alternativen Belichtungsstrategie der betreffenden Lage folgt das unvollständige Belichtungsregime bestimmten Mustern, beispielsweise einem Linienabstand bei der Belichtung, der bewusst so groß gewählt wird, dass zwischen den Spuren unbelichtete und nicht aufgeschmolzene oder nicht angeschmolzene Partikel verbleiben. In diesen Bereichen entstehen die gewünschten Poren. Dies erreicht man beispielsweise, indem man die parallelen Spuren während der Herstellung in regelmäßigen Abständen um beispielsweise 90° verdreht. Je nach gewünschter Porengröße findet dieser Wechsel nach einer bestimmten Anzahl von Pulverlagen statt.

Eine wieder andere Ausgestaltung der Erfindung sieht vor, dass die Kühlkanalstruktur und ein erstes Kanalsystem und ein von diesem fluidisch unabhängiges zweites Kanalsystem aufweist. Hierdurch wird es möglich, zwei verschiedene Kühlmittel mit unterschiedlichem Temperaturniveau zu verwenden. Das eine Kühlmittel fließt durch das erste Kanalsystem, während das andere Kühlmittel durch das zweite Kanalsystem fließt. Hierdurch lässt sich vorteilhaft die chemische Gleichgewichtsreaktion besser kontrollieren, wie im Folgenden noch näher erläutert wird.

So kann das kondensierte Produkt durch eine Leitung an einem geodätisch tief liegenden Punkt des Reaktionsraums abgeführt werden. Vorteilhaft ist, wenn der Reaktionsraum zu diesem Zweck mindestens eine in eine tiefer gelegene Region führende Abführleitung und mindestens eine an diese sich anschließende, in den Reaktionsraum mündende Rückführleitung aufweist. Diese Leitungen sind dann mit einem zweiten Auslass verbunden. Der Vorteil ist, dass sich auf diese Weise in der Reaktorregion unterschiedlicher Temperaturniveaus bilden können. So kann der Reaktor beispielsweise eine höher gelegene Region mit dem Reaktionsraum und eine tiefer gelegene Region aufweisen, wobei die tiefer gelegene Region von dem zweiten Kanalsystem durchlaufen wird. "Geodätisch" ist hier bezogen auf eine geodätische Lage (unter Berücksichtigung der Wirkungsrichtung der Schwerkraft) zu verstehen. Das erste Kanalsystem ist, wie bereits beschrieben, vorteilhaft zur Kühlung des Reaktionsraums bzw. des Reaktionskanals vorgesehen. Allerdings benötigt man eine zweite tiefer gelegen Region, wenn die immer noch unter Druck stehenden flüssigen Reaktionsprodukte unterkühlt werden sollen. Das unterkühlte flüssige Reaktionsprodukt kann gezielt aus dem Druckraum über ein Regelventil abgelassen werden. Die mit der Reaktionsstöchiometrie und der Kondensation des Reaktionsproduktes verbundene Volumenverminderung bei der Reaktion führt dazu, dass Frischgas mit den Reaktionsedukten von außen in den Reaktor nachströmt. Das Frischgas strömt dabei auch an dem Katalysator vorbei, wodurch die Reaktion in Gang gehalten wird.

Gemäß einer besonderen Ausgestaltung der Erfindung ist vorgesehen, dass eine der Stirnseiten des Druckbehälters als Deckelstruktur ausgebildet ist, oder mindestens eine Zugangsöffnung im Druckbehälter (11) vorgesehen ist, die mit Deckelstruktur verschlossen ist. Die Deckelstruktur ist im Vergleich zum restlichen Gehäuse kleiner, d. h. mit einer geringeren Masse hergestellt, und kann aus einem von der restlichen Gehäusestruktur abweichenden Material bestehen. Insbesondere lässt sich der Deckel mit beliebigen Fertigungsverfahren herstellen, beispielsweise gusstechnisch oder durch spanende Herstellungsverfahren, jedoch ist auch eine Herstellung durch ein additives Fertigungsverfahren möglich, vorzugsweise durch das Verfahren, mit dem auch die restliche Gehäusestruktur, die den Reaktionsraum bildet, hergestellt werden kann. Der überwiegende Teil des Druckbehälters, der durch die Gehäusestruktur gebildet wird, ist somit in einem Stück ausgeführt, während der Deckel ein gesondertes Bauteil bildet. Vorteilhaft gibt der Deckel eine Öffnung frei, durch die ein Katalysator in den Reaktionsraum eingefüllt werden kann. Außerdem ist auch bei einem additiven Herstellungsverfahren in dem Reaktionsraum verbleibendes Pulver (aus einem Pulverbett, welches beispielsweise beim SLN zur Herstellung des Bauteils dient) ohne großen Aufwand aus dem Reaktionsraum zu entfernen, bevor der Katalysator in den Reaktionsraum eingefüllt wird. Der Deckel kann auch als Rohrverschraubung mit Blindstopfen ausgeführt werden, wenn die Befüllöffnung für den Katalysator rohrartig ausgeführt wird. Bei getrennten Reaktionsräumen kann für jeden Reaktionsraum eine Befüllöffnung vorgesehen werden.

Der Katalysator muss in Abhängigkeit der durchzuführenden Reaktion ausgewählt werden. Abhängig vom Anwendungsfall sind bekannte Katalysatormaterialien für diesen Zweck auszuwählen. Der Katalysator besteht aus einer Schüttung von Partikeln, die durch ein Granulat, zylindrisches Extrudat, oder auch durch sphärische Kugeln gebildet sein kann. Vorzugsweise weisen die Partikel eine mittlere Partikelgröße von einem Millimeter auf. Nachdem der Reaktionsraum mit den Partikeln ausgefüllt ist, wird der Reaktor, wie bereits beschrieben, mit dem vorzugsweise druckfest konstruierten Deckel vorzugsweise über einen konventionellen Flansch verschlossen. Der druckfeste Deckel weist außerdem zur Ausbildung einer Dichtung eine Dichtungsauflage auf, die plan auf den Wänden des restlichen Gehäuses des Druckbehälters aufliegt und so eine gasdichte Verbindung ermöglicht. Hierdurch wird das Reaktionsfluid gezwungen, den vorgesehenen Weg durch die Katalysatorschüttung zu nehmen. Im Ausführungsbeispiel mit rohrförmigen Zuführungen wird der Katalysatorraum komplett angefüllt mit Katalysatorpartikeln und die Rohrverschraubung druckdicht geschlossen.

Die Baugröße des Reaktors kann bei Außenmaßen zwischen 100 mm und 1000 mm, bevorzugt zwischen 200 und 600 mm und besonders bevorzugt zwischen 250 mm und 400 mm liegen (die Außenmaße sind beispielsweise bei zylindrischer Grundform durch den Durchmesser gegeben). Die Bauhöhe kann zwischen 80 mm und 800 mm, bevorzugt zwischen 180 mm und 500 mm und besonders bevorzugt zwischen 250 mm und 400 mm liegen. Die äußerste Wand des Reaktors kann zur Erzeugung der Druckfestigkeit vorteilhaft mit einer größeren Wandstäre ausgeführt sein und ist wegen der Führung des Fluids, insbesondere bei spiralförmigen Verlauf des Reaktionskanals, kälter als der restliche Reaktor, was den Vorteil hat, dass das kühlere Material mechanisch stärker belastbar ist und daher einen höheren Druck ertragen kann.

Gemäß einer Ausgestaltung der Erfindung kann vorgesehen sein, dass in der besagten Außenwandstruktur des Druckbehälters, also der äußeren Wand, die auch die Druckfestigkeit des Druckbehälters gewährleisten muss, ein Vorwärmkanal für die Edukte verläuft, den Einlass für diese Edukte bildet. Dies bedeutet, dass die Edukte durch den Vorwärmkanal geleitet werden müssen, bevor sie in den Reaktionsraum gelangen. Hierbei kann vorteilhaft eine Vorwärmung der Edukte erfolgen, wobei gleichzeitig eine Kühlung der Außenwand möglich ist. Hierdurch lässt sich lokal das Temperaturgefälle in dem Reaktor beeinflussen, wodurch einerseits die Reaktionstemperatur der ablaufenden Reaktion im Reaktor und andererseits die mechanische Festigkeit der Außenwandstruktur gewährleistet wird.

Der Vorwärmkanal hat vorzugsweise einen meandernden Verlauf in der Außenwandstruktur. Hierdurch wird ein vergleichsweise langer Vorwärmkanal gebildet, so dass das Fluid genügend lange durch diesen strömen kann, um die Temperatur der Außenwandstruktur zu verringern und sich selbst zu erwärmen. Die Wände zwischen den benachbarten Schleifen des Vorwärmkanals können eine Stegbereite von 0,5 mm bis 2 mm Wandstärke aufweisen. Der Kanal kann Kanalbreiten zwischen 1 mm und 10 mm und eine Kanalhöhe von 1 mm bis 8 mm aufweisen. Die Kanalhöhe wird senkrecht zum Verlauf der Außenwandstruktur gemessen, während die Kanalbreite parallel zum Wandverlauf der Außenwandstruktur gemessen wird.

Besonders vorteilhaft ist es, wenn der Vorwärmkanal in der Außenwandstruktur in mehreren übereinander angeordneten Lagen verläuft. Hierdurch kann vorteilhaft die Länge des Vorwärmkanals noch größer ausfallen, weswegen das Reaktionsfluid, also die Edukte, noch stärker vorgewärmt werden können. Vorteilhaft ist es selbstverständlich, wenn der Vorwärmkanal erst durch die außenliegenden Lagen in der Wandstruktur und anschließend durch die innenliegenden Lagen in der Wandstruktur (oder bei zwei Lagen erst durch die äußere Lage und dann durch die innere Lage in der Wandstruktur) verläuft. Dies unterstützt die Kühlung der Außenwandstruktur, die dann außen kühler ist als innen. Dadurch strömt das kühle Edukt zunächst durch die außenseitige Lage in der Außenwandstruktur, wo es bereits aufgewärmt wird und anschließend durch die innere Lage der Außenwandstruktur, wo aufgrund des höheren Temperaturniveaus ein weiterer Wärmeaustausch mit der Außenwandstruktur möglich ist (Gleichstromprinzip eines Wärmetauschers).

Ist der Vorwärmkanal in benachbarten Lagen ausgeführt, ist es besonders vorteilhaft, wenn der Vorwärmkanal in benachbarten Lagen jeweils in sich kreuzenden Richtungen verläuft. In jeder Lage gibt es dann eine Vorzugsrichtung, in denen die Kanäle parallel verlaufen. Diese kann vorteilhaft im Verhältnis zur Längenausdehnung des Reaktors (also insbesondere im Verhältnis zu einer Längsachse des Reaktors) schräg angeordnet sein, so dass die Rippen, welche sich zwischen den parallelen Kanälen befinden, sich in benachbarten Lagen kreuzen. Hierdurch wird vorteilhaft eine mechanische Stabilisierung der Außenwandstruktur erreicht, da sich in den Kreuzungspunkten der Zwischenwände gitterartige Versteifungsstrukturen der Außenwandstruktur bilden. Hierdurch lässt sich eine hohe Druckstabilität bei gleichzeitig geringem Materialaufwand und geringer Wärmeableitung verwirklichen. Die dadurch entstehenden komplexen geometrischen Strukturen können vorzugsweise mit einem additiven Herstellungsverfahren ohne großen Aufwand hergestellt werden. Werden die Kanäle verkippt gegen die Längsausdehnung (also bei zylindrischer Ausbildung des Druckbehälters verkippt gegen die Zylinderachse) hergestellt, so ergibt deren Überlagerung ein Rautenmuster bei parallelem Verlauf des Vorwärmkanals. Bei einer Verkippung von 45°, die besonders vorteilhaft ist, ergibt sich ein Rechteckmuster, insbesondere ein Muster aus Quadraten.

Der spiralförmige Verlauf der Kanalstruktur kann beispielsweise definiert sein durch einen Verlauf des Radius

$$r = a \cdot t$$

mit

a > 0 und

t $\geq$ 0 (Definition einer Spirale bei Realisierung einer gleichbleibenden Kanalbreite)

oder

$$r^2 = a \cdot \varphi$$

mit

a > 0 und $\varphi \geq$ 0 (bei einer Kanalbreite, die zum Inneren der Spirale zunimmt, wobei hierdurch eine Verlangsamung der Flussgeschwindigkeit zum Inneren des zylindrischen Reaktionsraums erfolgt).

Eine andere Ausgestaltung der Erfindung sieht vor, dass der Reaktor eine höher gelegene Region mit dem Reaktionsraum und eine tiefer gelegene Region aufweist, wobei die tiefer gelegene Region von dem zweiten Kanalsystem durchlaufen wird. Hierdurch lässt sich der Reaktor in Zonen unterschiedlichen Temperaturniveaus aufteilen. Höher und tiefer gelegen im Sinne der Erfindung bedeutet geodätisch höher gelegen und geodätisch tiefer gelegen. Dies bedeutet, dass kühleres Reaktionsfluid bzw. ein Kondensat aufgrund der Schwerkraft in die tiefer gelegene Region strömt. Hierdurch kann das Reaktionsprodukt (flüssig oder gasförmig) im zweiten Kanalsystem einer Unterkühlung unterzogen werden. Das Reaktionsprodukt, welches im ersten Kanalsystem heruntergekühlt wird, steht nämlich immer noch unter Druck, und zwar unter demjenigen Druck, welcher in dem Reaktionsraum zur Unterstützung der Gleichgewichtsreaktion vorliegt. Um das Reaktionsprodukt dem Reaktor bei Normaldruck entnehmen zu können, ohne dass dieses verdampft, ist dieses deswegen vorher zu unterkühlen. Hierbei handelt es sich reaktionstechnisch um eine Maßnahme, welche vorteilhaft in einem integralen Teil des Reaktors, nämlich der tiefer gelegenen Region erfolgen kann. Dies bedeutet, dass der Reaktor eine weitere Funktionsintegration ermöglicht, die in ein und denselben Bauteil integriert sein kann. Eine besonders kompakte Bauweise ist dadurch möglich.

Vorteilhaft ist es auch, wenn der Reaktionsraum durch eine Siebstruktur von der mindestens einen Abführleitung und/oder von der mindestens einen Rückführleitung getrennt ist. Dies ermöglicht vorteilhaft auch bei einer komplexen Bauweise, dass die Schüttung an Katalysatorpartikel nicht in die Abführleitung oder die Rückführleitung gelangt, während das Reaktionsfluid strömt. Die Siebstrukturen tragen daher zur Bildung eines definierten Reaktionsraums bei, in dem die Schüttung der Katalysatorpartikel zuverlässig gehalten werden kann.

Der Reaktionsraum hat vorteilhaft mindestens eine in die tiefer gelegene Region führende Abführleitung und mindestens eine an diese sich anschließende, in den Reaktionsraum mündende Rückführleitung, wobei diese Leitungen mit einem zweiten Auslass verbunden sind. Der zweite Auslass führt also das Reaktionsfluid nach Durchlaufen der tiefer gelegenen Region zurück in den Reaktionsraum. Derlei Strukturen können einmal oder auch mehrfach in dem Reaktionsraum untergebracht werden. Es wird vorteilhaft ermöglicht, dass aus dem Reaktionsfluid auf diesem Wege in der tiefer gelegenen Region das Reaktionsprodukt insbesondere durch Kondensation abgeschieden wird, wodurch das Reaktionsgleichgewicht in günstiger Weise derart verschoben wird, dass mehr von den Reaktionsedukten zu den Reaktionsprodukten umgesetzt wird.

Besonders vorteilhaft ist es, wenn je eine Abführleitung entlang zweier benachbarter Trennwände verläuft und zwischen den beiden Abführleitungen die Rückführleitung verläuft oder abwechselnd mehrere Abführleitungen und Zuführleitungen parallel zueinander verlaufen. Bei dieser Konstruktion ist es vorteilhaft möglich, dass die Abführleitungen bereits eine Kühlung des Fluids über die Trennwände erfahren, bevor das Reaktionsfluid in die tiefer gelegene Region abgeführt wird. Zwischen den beiden an den Trennwänden verlaufenden Abführleitungen befindet sich mindestens eine Rückführleitung oder eine ungerade Zahl an Rückführleitungen und eine gerade Zahl an Abführleitungen. Die gerade Zahl an Abführleitungen ist dann um 1 geringer als die ungerade Zahl an Rückführleitungen, wobei diese abwechselnd angeordnet sind. Durch die abwechselnde Anordnung von Abführleitungen und Rückführleitungen ist durch das hierdurch gebildete Kanalsystem ein Gegenstromwärmetauscher realisiert. Mit anderen Worten kann das durch die Abführleitungen geführte Reaktionsfluid gekühlt werden, indem das durch die Rückführleitungen strömende Reaktionsfluid erwärmt wird (es findet also ein Wärmetausch statt). Hierdurch wird das Reaktionsfluid gekühlt, bevor es in die tiefer gelegene Region gelangt und anschließend wieder erwärmt, bevor es in den Reaktionsraum gelangt. Hierdurch wird eine günstige Energiebilanz für den Reaktor verwirklicht.

Beispielhaft seien zwei Reaktionen genannt, die mit dem erfindungsgemäßen Reaktor durchgeführt werden kann. Die eine Reaktion betrifft die Erzeugung von Methanol aus Wasserstoff und Kohlendioxid (Feed Stock) im Reaktor entsteht dann eine Reaktionsmischung aus dem Feed Stock Material und Methanol, wobei in einem ersten Schritt als Kondensat 1 Wasser abgeschieden werden kann, um das Reaktionsgleichgewicht günstig zu verschieben. Als Kondensat 2 (abgeschieden in der tiefer gelegenen Region) wird dann Methanol abgeschieden, welches vorteilhaft bereits eine hohe Konzentration im Reaktionsprodukt aufweist. Hierzu kommen geeignete Kühlmittel 1 und Kühlmittel 2 zum Einsatz. Die Reaktion ist in folgender Tabelle näher dargestellt.

| Reaktionsschritt | Druck | Temperatur | Reaktionsgleichung |
|---|---|---|---|
| Feedstock | 150 bar | 25°C | $3H_2+CO_2$ |
| Reaktionsmischung | 150 bar | 220°C | $3H_2+CO_2+CH_3OH+H_2O$ |
| Kühlmittel 1 | 1 bar | 200°C in 220°C out | z.B. Marlotherm N Hochtemperaturfluid |
| Kondensat 1 | 150 bar | ca. 220°C (Gleichgewichtspartialdruck ca 24 bar entspricht Taupunkt ca 222 °C) | $H_2O$ [ganz wenig CO2, $CH_3OH$ gelöst] |
| Kühlmittel 2 | 1 bar | 15°C in 30°C out | $H_2O$ Kühlwasser, Leitungswasser |
| Kondensat 2 | 100 bar | z.B. 40°C (Gleichgewichtspartialdruck ca 24 bar entspricht Taupunkt ca 175 °C) | $CH_3OH$ [+$H_2O$+wenig $CO_2$] |

Eine andere Reaktion ist die Herstellung von Ammoniak aus Stickstoff und Wasserstoff. Diese werden als Feed Stock beigemischt, wobei die Reaktionsmischung auch Ammoniak enthält. Die zweistufige Kondensation über ein Kühlmittel 1, ein Kühlmittel 2 und ein Kühlmittel 3 bringt Ammoniak hervor, welches in dem Reaktionsprodukt in einer vergleichsweise hohen Konzentration vorliegt. Die Reaktion ist in der folgenden Tabelle dargestellt.

| Reaktionsschritt | Druck | Temperatur | Reaktionsgleichung |
|---|---|---|---|
| Feedstock | 250 bar | 50°C | $3H_2 + N_2$ |
| Reaktionsmischung | 250 bar | 500°C | $3H_2 + N_2 + NH_3$ |
| Kühlmittel 1 | 10 bar | 350°C out | Naphthalin-Heatpipe + Marlotherm |
| Kühlmittel 2 | 1 bar | 60°C in 110°C out | Marlotherm |
| Kondensat | 250 bar | 90°C (Gleichgewichtspartialdr uck NH3 ca. 130 bar entspricht Taupunkt 113 °C) | $NH_3(1)$ [kaum $H_2$ + kaum $N_2$] |
| Kühlmittel 3 | 1 bar | 15°C in 30°C out | $H_2O$ Kühlwasser, Leitungswasser |
| Unterkühltes Kondensat | 250 bar | 25°C | $NH_3(1)$ [kaum $N_2,H_2$] |

Die Vorteile der erfindungsgemäßen Gestaltung des Reaktors können für die Durchführung von Gleichgewichtsreaktionen mit gasförmigen Edukten und gasförmigen, bei höheren Temperaturen kondensierbaren Produkten folgt zusammengefasst werden.

1. Prozessintegration realisieren durch Additive Manufacturing dieser folgenden Funktionen und Konzept in EINEM EINZIGEN monolithischen Bauteil (evtl. mit zusätzlichem Deckel).

    a. Kondensierender Reaktor, damit Stofftrennung schon im Reaktor möglich wird durch selektive Kondensation der Produkte, dazu

        i. Chemisches Gleichgewicht maximal verschieben auf Seite der Produkte, so dass Taupunkt erreicht wird

            1. Niedrigst mögliche Temperatur (exotherme Reaktion)
            2. Hoher Druck (Volumenverminderung bei Reaktion)
            3. Ständige Nachbildung ermöglichen durch konstanten Abzug von Wärme (aus exothermer Reaktion) und von Reaktionsprodukten

        ii. Wärmeabfuhr bei relativ hohem Temperaturniveau, das gerade noch Kondensation der Produkte ermöglicht, dadurch
        iii. Konstanter Abzug der Produkte im Reaktor an einer gekühlten Struktur (z.B. Wand).

            1. Unterstützt durch Kapillarkondensation in poröser metallischer Schicht auf der Wand
            2. Bei Produktgemischen Ausnutzung der unterschiedlichen Taupunkte und selektive Kondensation im Reaktor durch Schaffen verschiedener Temperaturzonen:

                a. Komponente 1 (tiefer kondensierend) wird überall an der Wand der Spirale des Reaktionsraumes abgezogen.
                b. Komponente 2 wird auskondensiert beim Abtauchen des Reaktionsgases in eine tiefer liegende Region des Reaktors, der kälter gekühlt wird und die kondensierbaren Produkte weitgehend auskondensiert.
                c. Abtauchen/Auftauchen des Reaktionsgases im Konzept eines Feed-Effluent-Tauschers, bestehend aus den Abführleitungen und den Rückführleitungen.
                d. Wiederholung dieser Auskondensation mehrmals hintereinander, so dass fast die komplette zugeführte Gasmenge abreagiert (Konzept "gekühlter Hordenreaktor" mit Produktabzug).

        iv. Nutzung der Abwärme im Kühlsystem auf höchstmöglichem Temperaturniveau (wertvolle Wärme im Sinne guter Exergienutzung).
        v. Aufbau des Reaktors mit äußeren Vorheizzonen, so dass keine Wärme verloren geht trotz kleiner Bauform.
        vi. Nutzung von Additive Manufacturing mit dicken Wandstärken im Außenbereich für hohe Druckfestigkeit und komplexen Kanalsystemen im Wandaufbau.
        vii. Design angepasst an die Reaktion, beispielsweise der Reaktionszone im Inneren, die das Gas spiralförmig von außen nach innen führt und in den Trennwänden die Kondensationskühlung führt, an den Wänden das Kondensat in die unteren Region des Reaktors abführt.
        viii. Nur ganz kleiner Tailgas-Abzug im Zentrum, um die Reaktion zu starten/kontrollieren und Inertgase abzuziehen (die Gase "rutschen" automatisch weiter, weil Volumenkontraktion auftritt durch die Reaktion und durch die Auskondensation). Es handelt sich nahezu um einen "Dead-End-Reaktor" ohne dass Gas im Kreislauf bewegt werden muss.

    b. Isothermer Reaktor führt zu möglichst definiertem Produkt, da Hot Spots vermieden werden und im ganzen Reaktor identische Reaktionsbedingungen vorliegen

2. Vereinfachung der Bauweise im Gesamtsystem, da viele Verrohrungen, Bauteile, Process Units wegfallen (Destillation, Rückverdichtung, Kühler, Phasenabscheider, etc. - alles ist schon im Reaktor mittels Additive Manufacturing monolithisch integriert).
3. Fluktuierend betreibbar, weil schnelle Aufheizung bzw. Temperierung auf Reaktionstemperatur möglich bleibt durch das Temperiermittel und dadurch sofort die Reaktion gestartet werden kann, sowie eine Steuerung von Temperiermittelmassenströmen, Eduktgasmassenstrom, Eduktgaszusammensetzung, Reaktionsdruck und Massenströme des Produktabzugs so gesteuert werden können, dass der Katalysator in einem aktiven Ruhezustand "geparkt" werden kann bei Pausen, um dann wieder sofort zu starten.
4. Einfache Steuerung der Reaktion über die Temperaturen der Temperiermedien und den Druck des Reaktionssystems. Vollautomatisierbar als dezentrale Lösung in Containergröße.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen

Figur 1 ein Ausführungsbeispiel des erfindungsgemäßen Reaktors, wobei nur der Druckbehälter dargestellt ist, teilweise aufgeschnitten und in dreidimensionaler Ansicht,

Figur 2 ein anderes Ausführungsbeispiel des Druckbehälters schematisch in dreidimensionaler Ansicht,

Figur 3 ein weiteres Ausführungsbeispiel des erfindungsgemäßen Druckbehälters des Reaktors in dreidimensionaler Ansicht,

Figur 4 ein Ausführungsbeispiel einer Trennwand in dem Druckbehälter, welche den Reaktionskanal begrenzt, schematisch im Querschnitt, wobei diese Trennwand in jedem der Ausführungsbeispiele gemäß Figur 1 bis 3 zum Einsatz kommen kann,

Figur 5 ein Ausführungsbeispiel für Abführleitungen und Rückführleitungen, wie sie im Reaktionskanal in den Druckbehältern gemäß der Figuren 1 bis 3 zum Einsatz kommen kann, schematisch in dreidimensionaler Ansicht und

Figur 6 ein alternatives Anordnungsbeispiel von Abführleitungen und Rückführleitungen gemäß Figur 5.

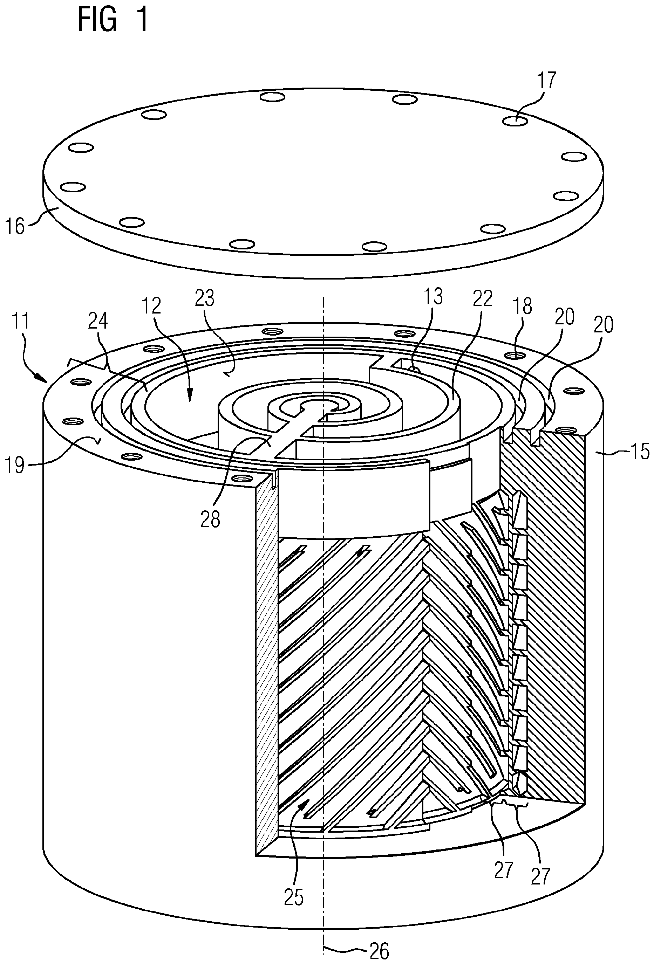

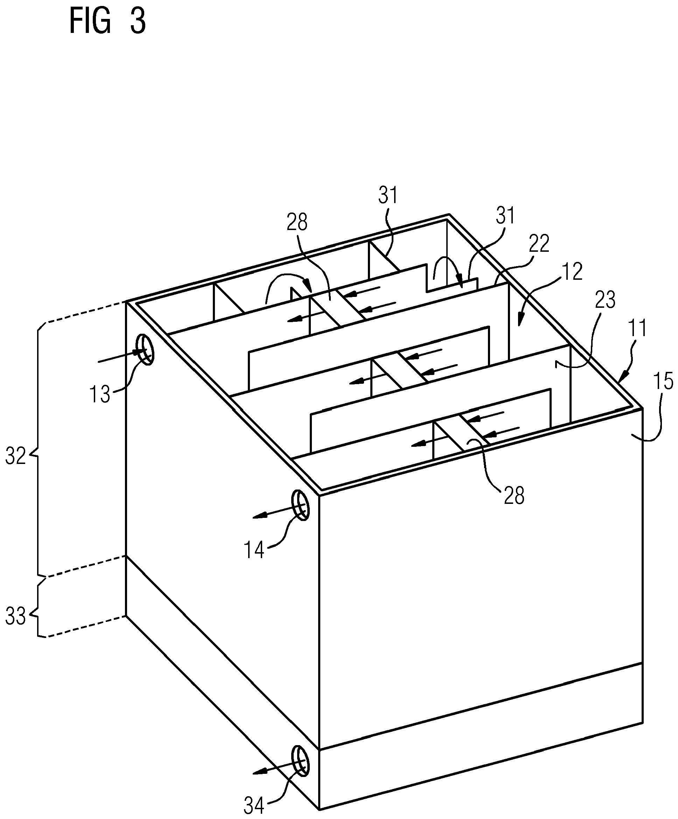

In Figur 1 ist ein Druckbehälter 11 für den erfindungsgemäßen Reaktor dargestellt. Dieser weist eine zylindrische Grundform auf. In dem Druckbehälter 11 ist ein spiralförmig verlaufender Kanal ausgebildet, der einen Reaktionsraum 12 bildet. Der Reaktionsraum 12 weist außerdem einen Einlass 13 sowie einen nicht näher dargestellten ersten Auslass (vgl. in Figur 3, Bezugszeichen 14) auf.

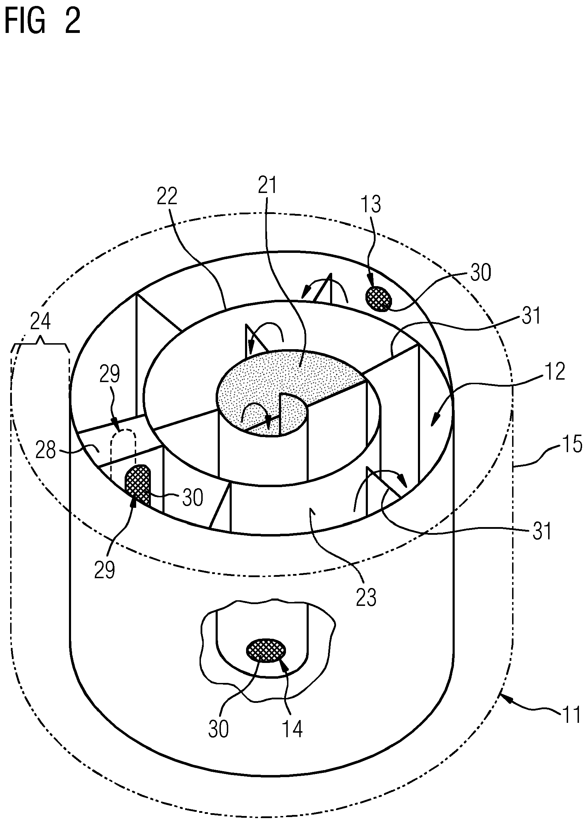

Der Druckbehälter 11 ist zum größten Teil in einem Stück hergestellt. Dieser größte Teil besteht nämlich aus einem Gehäuse 15, welches mit einem Deckel 16 verschlossen werden kann. In dem Deckel 16 sind Löcher 17 und in dem Gehäuse 15 Gewindelöcher 18 vorgesehen, so dass der Deckel mit nicht dargestellten Schrauben oder Gewindestangen und Muttern auf dem Gehäuse montiert werden kann. Das Gehäuse 15 bildet dabei einen Flansch 19 aus, der auch Nuten 20 für nicht dargestellte Dichtringe aufweist, so dass eine zuverlässige Dichtung zwischen Gehäuse 15 und Deckel 16 erfolgen kann. Es könnte auch noch eine Dichtung in den Spiralschleifen liegen, ebenfalls nicht dargestellt. Vor der Montage des Deckels 16 kann der Reaktionsraum 12 mit einer Schüttung (vgl. Figur 2, Bezugszeichen 21) aus Katalysatorpartikeln befüllt werden.

Das Gehäuse 15 weist, wie im Folgenden noch näher erläutert wird, eine komplexe Struktur auf, die sich durch ein additives Verfahren, wie z. B. dem Laserschmelzen, in einem Stück herstellen lässt. Die nach oben offene Ausführung des Gehäuses 15 ermöglicht es vorteilhaft, dass im Reaktionsraum 12 verbleibendes Pulver einfach entfernt werden kann, bevor die Schüttung 21 in den Reaktionsraum eingefüllt wird.

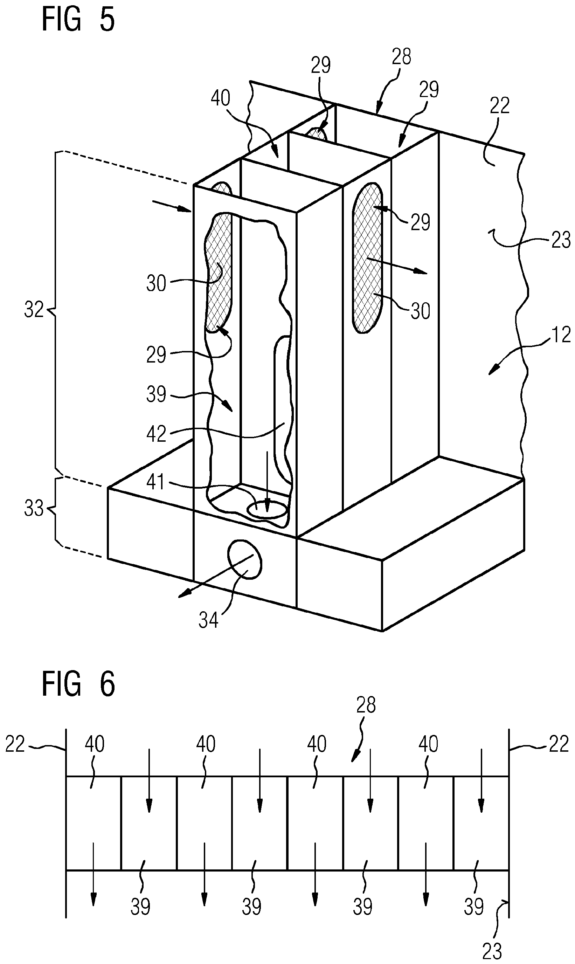

Der Reaktionsraum 12 ist durch eine Trennwand 22 so eingeteilt, dass dieser spiralförmig von außen nach innen läuft, wobei der Reaktionsraum insgesamt eine zylindrische Form aufweist. Der ringförmige Reaktionskanal erstreckt sich mit seinem Querschnitt jeweils von der nicht dargestellten Bodenfläche bis zur oben offenen Deckelfläche, die durch den Deckel 16 verschlossen wird. In dem so gebildeten spiralförmigen Reaktionskanal sind außerdem Kondensationsfallen 28 ausgebildet, deren Funktion im Folgenden noch näher erläutert wird (vgl. Figuren 5 und 6). Diese werden von dem Reaktionsfluid durchlaufen, während es spiralförmig von dem Einlass 13 nach innen zu dem Auslass 14 (vgl. Figur 2) fließt.

Der Reaktionsraum 12 ist von einer druckfesten Außenwandstruktur 24 umgeben. Die Wandstärke ermöglicht es, dass im Reaktionsraum 12 ein Druck von beispielsweise 100 bar aufgebaut werden kann. Außerdem ist in der Außenwandstruktur 24 ein Vorwärmkanal 25 für das Reaktionsfluid vorgesehen, welcher von einem nicht dargestellten äußeren Einlass zum Einlass 13 des Reaktionsraums führt. Der Vorwärmkanal 25 weist einen mäandernden Verlauf auf, dies bedeutet, dass der Vorwärmkanal abwechselnd immer nach oben und wieder nach unten führt. Der Verlauf der so gebildeten Schleifen ist 45° zu einer Mittelachse 26 des Reaktors geneigt. Außerdem ist der Vorwärmkanal 25 in zwei in radialer Richtung übereinander liegenden Lagen 27 angeordnet, wobei die Neigung der einzelnen Schleifen des Vorwärmkanals 25 in den beiden Lagen um 90° verdreht ist. Hierdurch ergibt sich in der Aufsicht ein sich kreuzendes Muster der zwischen den Schleifen liegenden Wände, so dass eine optimale Versteifung der Außenwandstruktur 24 erreicht wird.

In Figur 2 ist ein Druckbehälter 11 schematisch dargestellt, der ebenso wie der Druckbehälter in Figur 1 einen spiralförmig verlaufenden Reaktionskanal aufweist. Zusätzlich ist zu erkennen, dass der Einlass 13 und der Auslass 14 sowie Durchlässe 29 für das Reaktionsfluid an der Kondensationsfalle 28 mit Siebstrukturen 30 versehen sind, damit die Schüttung 21 zuverlässig im Reaktionsraum 12 gehalten werden kann. Außerdem sind in dem Reaktionskanal Strömungshindernisse 31 angebracht, die Schikanen für das strömende Reaktionsfluid ausbilden, so dass dieses im Reaktionsraum 12 zwangsgeführt wird. Wie Figur 2 zu entnehmen ist, weichen die Strömungshindernisse zur Hälfte nicht bis an den in Figur 2 nicht dargestellten Deckel heran. Die andere Hälfte der Strömungshindernisse ist in nicht dargestellter Weise im Bodenbereich des Gehäuses 15 offen, so dass das Reaktionsfluid dort um die Strömungshindernisse herum strömen kann. Wie durch die Pfeile angedeutet ist, entsteht hierdurch ein von oben nach unten mäandernder Verlauf des Reaktionsfluids.

Die Schüttung ist der Übersichtlichkeit halber nur im inneren Bereich des Reaktionsraums 12 dargestellt. In Wirklichkeit wird selbstverständlich der gesamte Reaktionsraum mit der Schüttung 21 ausgefüllt. Der erste Auslass 14 ist nur deswegen zu erkennen, weil das Gehäuse teilweise aufgebrochen dargestellt ist. Im Aufbruch lässt sich der innerste Teil der durch die Trennwand 22 gebildeten Spirale erkennen. Am Boden dieser innersten Struktur ist der erste Auslass 14 am Boden angeordnet.

In Figur 3 ist ein alternativer Verlauf des im Reaktionsraum 12 durch die Trennwände 22 ausgebildeten Reaktionskanals gezeigt. Der Reaktionsraum 12 insgesamt ist quaderförmig, wobei die Trennwände 22 gerade verlaufen. Deswegen ergibt sich ein gefalteter Verlauf des Reaktionskanals. Auch in diesem können, wie im ersten Teil des Reaktionskanals angedeutet, Strömungshindernisse 31 vorgesehen sein. Außerdem ist zu erkennen, dass in regelmäßigen Abständen Kondensationsfallen 28 im Reaktionskanal angeordnet sind.

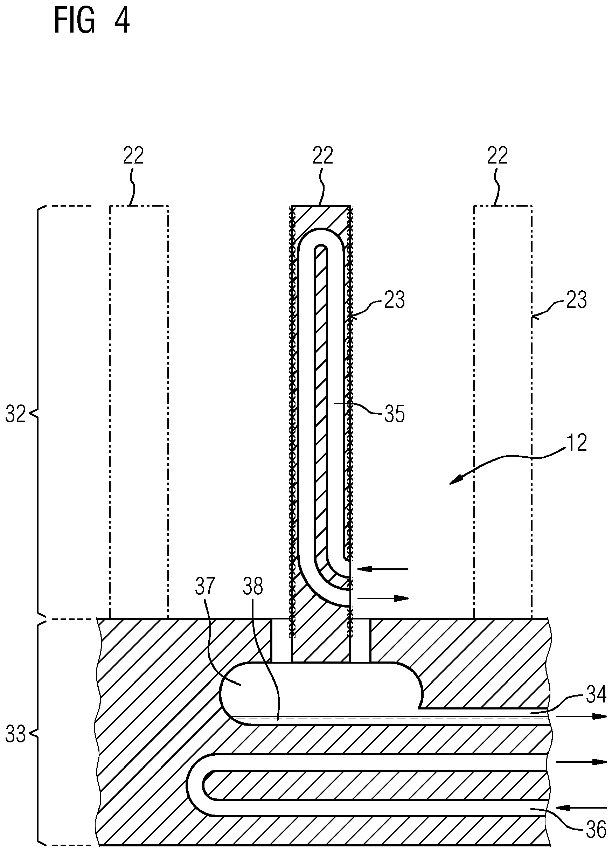

Der Figur 3 ist ebenfalls zu entnehmen, dass der Druckbehälter 11 in eine höhere Region 32 und eine tiefere Region 33 unterteilt ist. Diese Regionen liegen auf einem unterschiedlichen Temperaturniveau, wie gemäß Figur 4 noch näher erläutert wird. Hierdurch ist es möglich, ein Reaktionsprodukt in der tieferen Region 33 zu kühlen, um dieses über einen zweiten Auslass 34 aus dem Druckbehälter 11 zu entnehmen. Insbesondere kann in der tiefer gelegenen Region 33 eine Unterkühlung des unter Druck stehenden Reaktionsprodukts, insbesondere des Kondensats, erfolgen, damit dieses durch den zweiten Auslass 34 aus dem Druckbehälter 11 ausgetragen werden kann, ohne erneut zu sieden.

In den Figuren 2 und 3 sind die jeweiligen Gehäusestrukturen, die den Druckbehälter 11 bilden, mit einem Deckel 16 und einer zugehörigen Öffnung versehen. Da eine Herstellung des Druckbehälters 11 mit additiven Herstellerverfahren große gestalterische Freiheiten ermöglicht, ist auch eine Bauweise vorstellbar, bei der nicht eine einzige Öffnung durch einen Deckel 16 verschlossen wird. Alternativ können beispielsweise mehrere Rohrstutzen angeordnet sein (in Figur 2 und 3 nicht dargestellt), wobei diese Vorstufen zur Befüllung der Innenstrukturen des Druckbehälters 11 mit den Partikeln dienen. Anschließend können diese Rohrstutzen mit Deckelstrukturen von der Außenwelt hermetisch berichtet werden.

Gemäß Figur 4 ist zu erkennen, dass die Trennwände 22 von einem ersten Kanalsystem 35 durchlaufen werden kann, wobei durch dieses erste Kanalsystem ein erstes Kühlmittel transportiert wird. Hierdurch stehen die Trennwände 22 als Kondensationsflächen 23 zur Verfügung, wobei an diesen das Reaktionsprodukt auskondensiert und anschließend in ein Reservoir 37 gelangt. Das Reservoir 37 befindet sich in der tieferen Region 33, wo ein zweites Kanalsystem 36 mit einem zweiten Kühlmittel durchflossen werden kann. Nach Unterkühlung des Kondensats 38 kann dieses durch den zweiten Auslass 34 entnommen werden.

Zur Unterstützung der Kondensation kann die Kondensationsfläche 23 eine in Figur 4 durch eine Kreuzschraffur angedeutete Porosität aufweisen. Diese lässt sich durch ein additives Herstellungsverfahren beispielsweise durch Beeinflussung der Fertigungsparameter einstellen. Die poröse Struktur kann auch als Feingitter hergestellt werden, wobei das Kondensat in den Gitterzwischenräumen in das Reservoir 37 fließen kann. Die Gitterstäbe bzw. das Material der porösen Struktur steht dabei zur Wärmeleitung zur Verfügung, so dass die Wärme schnell in die Trennwand 22 abgeführt werden kann, wo diese an das in dem ersten Kanalsystem 35 strömende Kühlfluid abgegeben wird.

In Figur 5 ist der Aufbau einer Kondensationsfalle 28 näher dargestellt, wie dieser gemäß Figur 1 bis 3 zur Anwendung kommen kann. Die Kondensationsfalle gemäß Figur 5 besteht aus zwei Abführleitungen 39 und einer Rückführleitung 40. Gemäß Figur 6 ist zu erkennen, dass auch mehrere Abführleitungen 39 und Rückführleitungen 40 im Wechsel zwischen den Trennwänden 22 des Reaktionskanals ausgebildet sein können.

Die Abführleitungen 39 weisen im oberen Bereich den Durchlass 29 für das Reaktionsfluid auf. In den Abführkanälen wird das Reaktionsfluid daher von oben nach unten geführt, während es über die Trennwände 22 und die Rückführleitungen 40 gekühlt wird. Dabei fällt Kondensat aus, welches durch eine Öffnung 41 im Boden in die tiefere Region 33 fließen kann. Dort kann ein nicht näher dargestelltes Reservoir 37 (vgl. Figur 4) zur Verfügung stehen, um das Kondensat aufzunehmen und durch ein ebenfalls nicht dargestelltes zweites Kanalsystem 36 (vgl. Figur 4) gekühlt zu werden.

Das verbleibende Reaktionsfluid gelangt durch eine weitere Öffnung 42 in die Rückführleitung 40 und strömt dort wieder nach oben zu dem in der Rückführleitung angeordneten Durchlass 29, durch den das Reaktionsfluid wieder in den Reaktionsraum 12 gelangt. Da das durch die Rückführleitung 40 geführte Reaktionsfluid kühler ist als das durch die Abführlung geführte Reaktionsfluid, ist durch den Aufbau der Kondensationsfalle ein Gegenstromkühler realisiert, so dass zum Zwecke der Auskondensation des Reaktionsprodukts eine Kühlung des Reaktionsfluids stattfinden kann und dieses vor dem Eintreten in den Reaktionsraum 12 wieder erwärmt werden kann.

**Patentansprüche**

1. Reaktor zur Durchführung einer chemischen Gleichgewichtsreaktion zwischen mindestens zwei gasförmigen Edukten und mindestens einem gasförmigen Produkt, aufweisend einen Druckbehälter (11), in dem ein Reaktionsraum (12) mit einem Einlass (13) für die Edukte und einen ersten Auslass (14) für die Produkte vorgesehen ist,

   • wobei in dem Reaktionsraum (12) ein katalytisches Material angeordnet ist,
   • wobei in dem Reaktionsraum (12) eine Kondensationsfläche (23) für das mindestens eine Produkt vorgesehen ist,
   • wobei die Kondensationsfläche durch eine Kühlkanalstruktur (35, 36) gekühlt wird,

   **dadurch gekennzeichnet,**
   **dass** der überwiegende Teil des Druckbehälters (11) und die Kühlkanalstruktur (35, 36) ein einem Stück ausgeführt sind.

2. Reaktor nach Anspruch 1,
   **dadurch gekennzeichnet,**
   **dass** der Reaktionsraum (12) als Reaktionskanal ausgeführt ist, der zwischen Trennwänden (22) gefaltet oder spiralförmig in dem Druckbehälter (11) verläuft, wobei sich der Querschnitt des Reaktionskanals zwischen gegenüberliegenden Stirnseiten des Druckbehälters erstreckt.

3. Reaktor nach Anspruch 2,
   **dadurch gekennzeichnet,**
   **dass** Strömungshindernisse (31) in dem Reaktionskanal ausgebildet sind, die abwechselnd von der einen und von der anderen Stirnseite des Druckbehälters (11) in den Reaktionskanal hineinragen.

4. Reaktor Anspruch 2 oder 3,
   **dadurch gekennzeichnet,**
   **dass** die Kühlkanalstruktur (35, 36) in den Trennwänden (22) verläuft.

5. Reaktor nach einem der voranstehenden Ansprüche,
   **dadurch gekennzeichnet,**
   **dass** die Kondensationsfläche (23) porös ausgebildet ist.

6. Reaktor nach einem der voranstehenden Ansprüche,,
   **dadurch gekennzeichnet,**
   **dass** die Kühlkanalstruktur und ein erstes Kanalsystem (35) und ein von diesem fluidisch unabhängiges zweites Kanalsystem (36) aufweist.

7. Reaktor nach einem der voranstehenden Ansprüche,
   **dadurch gekennzeichnet,**
   **dass** eine der Stirnseiten des Druckbehälters (11) als Deckelstruktur (16) ausgebildet ist oder mindestens eine Zugangsöffnung im Druckbehälter (11) vorgesehen ist, die mit Deckelstruktur verschlossen ist.

8. Reaktor nach einem der voranstehenden Ansprüche,
   **dadurch gekennzeichnet,**
   **dass** der Reaktionsraum (12) mit einer Schüttung (21) von katalytischen Partikeln als katalytisches Material ausgefüllt ist.

9. Reaktor nach einem der voranstehenden Ansprüche,
   **dadurch gekennzeichnet,**
   **dass** in einer Außenwandstruktur (24) des Druckbehälters (11) ein Vorwärmkanal (25) für die Edukte verläuft, der den Einlass bildet.

**10.** Reaktor nach Anspruch 9,
**dadurch gekennzeichnet,**
**dass** der Vorwärmkanal (25) einen mäandernden Verlauf in der Außenwandstruktur (24) aufweist.

**11.** Reaktor nach einem der Ansprüche 9 oder 10,
**dadurch gekennzeichnet,**
**dass** der Vorwärmkanal (25) in der Außenwandstruktur (24) in mehreren übereinander angeordneten Lagen (27) verläuft.

**12.** Reaktor nach einem der voranstehenden Ansprüche,
**dadurch gekennzeichnet,**
**dass** der Vorwärmkanal (25) in benachbarten Lagen (27) jeweils in sich kreuzenden Richtungen verläuft.

**13.** Reaktor nach einem der voranstehenden Ansprüche,
**dadurch gekennzeichnet,**
**dass** dieser eine höher gelegene Region (32) mit dem Reaktionsraum und eine tiefer gelegene Region (33) aufweist, wobei die tiefer gelegene Region (33) von dem zweiten Kanalsystem (36) durchlaufen wird.

**14.** Reaktor nach Anspruch 13,
**dadurch gekennzeichnet,**
**dass** der Reaktionsraum (12) mindestens eine in die tiefer gelegene Region (32) führende Abführleitung (39) und mindestens eine an diese sich anschließende in den Reaktionsraum mündende Rückführleitung (40) aufweist, wobei diese Leitungen mit einem zweiten Auslass (34) verbunden sind.

**15.** Reaktor nach Anspruch 14,
**dadurch gekennzeichnet,**
**dass** der Reaktionsraum (12) durch eine Siebstruktur (30) von der mindestens einen Abführleitung (39) und/oder von der mindestens einen Rückführleitung (40) getrennt ist.

**16.** Reaktor nach Anspruch 14 oder 15,
**dadurch gekennzeichnet,**
**dass** je eine Abführleitung (39) entlang zweiter benachbarter Trennwände (22) verläuft und zwischen den beiden Abführleitungen (39) die Rückführleitung (40) verläuft oder abwechselnd mehrere Abführleitungen und Zuführleitungen verlaufen.

## FIG 1

FIG 2

FIG 3

# FIG 4

## FIG 5

## FIG 6

Europäisches
Patentamt

European
Patent Office

Office européen
des brevets

# EUROPÄISCHER RECHERCHENBERICHT

**Nummer der Anmeldung**

EP 18 18 6079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 599 510 A (KAMINSKY MARK P [US] ET AL) 4. Februar 1997 (1997-02-04) | 1,7,8 | INV. B29C64/00 B01J19/24 |
| A | * Abbildung 3 * | 2-4 | |
| A | WO 2015/077490 A1 (SCHALANSKY CARL [US]) 28. Mai 2015 (2015-05-28) * das ganze Dokument * | 1 | |
| A | WO 02/063230 A1 (SCIENT DESIGN CO [US]) 15. August 2002 (2002-08-15) * das ganze Dokument * | 1-4 | |
| X | WO 2009/081175 A1 (COMPACTGTL PLC [GB]; BOWE MICHAEL JOSEPH [GB]; LEE-TUFFNELL CLIVE DERE) 2. Juli 2009 (2009-07-02) | 1,7,8 | |
| A | * Abbildungen 1a, 1b * | 2-4 | |
| X | US 4 101 287 A (SWEED NORMAN H ET AL) 18. Juli 1978 (1978-07-18) | 1,7,8 | |
| A | * Spalte 3; Abbildung 1 * | 2-4 | |
| X | US 2016/194563 A1 (TONKOVICH ANNA LEE [US] ET AL) 7. Juli 2016 (2016-07-07) | 1,7,8 | RECHERCHIERTE SACHGEBIETE (IPC) B01J B29C |
| A | * Absatz [0184]; Abbildung 2 * | 2-4 | |

~~Der vorliegende Recherchenbericht wurde für alle Patentan~~sprüche erstellt

| Recherchenort | Abschlußdatum der Recherche | Prüfer |
|---|---|---|
| München | 26. Februar 2019 | Pasanisi, Andrea |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-4(vollständig); 7, 8(teilweise)

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

Nummer der Anmeldung

EP 18 18 6079

# MANGELNDE EINHEITLICHKEIT
## DER ERFINDUNG
## ERGÄNZUNGSBLATT B

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4(vollständig); 7, 8(teilweise)

   Die technischen Merkmale, die die Erfindung 1 hervorheben, sind: Ein Reaktor nach Anspruch 1, wobei der Reaktionsraum (12) als Reaktionskanal ausgeführt ist, der zwischen Trennwänden (22) gefaltet oder spiralförmig in dem Druckbehälter (11) verläuft, wobei sich der Querschnitt des Reaktionskanals zwischen gegenüberliegenden StirnSeiten des Druckbehälters erstreckt.
   ---

2. Ansprüche: 1, 5(vollständig); 7, 8(teilweise)

   Die technischen Merkmale, die die Erfindung 2 hervorheben, sind: Ein Reaktor nach Anspruch 1, wobei die Kondensationsfläche (23) porös ausgebildet ist.
   ---

3. Ansprüche: 1, 6(vollständig); 7, 8(teilweise)

   Die technischen Merkmale, die die Erfindung 3 hervorheben, sind: Ein Reaktor nach Anspruch 1, wobei die Kühlkanalstruktur und ein erstes Kanalsystem (35) und ein von diesem fluidisch unabhängiges zweites Kanalsystem (36) aufweist.
   ---

4. Ansprüche: 1, 9-11

   Die technischen Merkmale, die die Erfindung 4 hervorheben, sind: Ein Reaktor nach Anspruch 1, wobei in einer Außenwandstruktur (24) des Druckbehälters (11) ein Vorwärmkanal (25) für die Edukte verläuft, der den Einlass bildet.
   ---

5. Ansprüche: 1, 12-16

   Die technischen Merkmale, die die Erfindung 5 hervorheben, sind: Ein Reaktor nach Anspruch 1, wobei der Vorwärmkanal (25) in benachbarten Lagen (27) jeweils in sich kreuzenden Richtungen verläuft.
   ---

**ANHANG ZUM EUROPÄISCHEN RECHERCHENBERICHT
ÜBER DIE EUROPÄISCHE PATENTANMELDUNG NR.**

EP 18 18 6079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2019

| Im Recherchenbericht angeführtes Patentdokument | Datum der Veröffentlichung | Mitglied(er) der Patentfamilie | Datum der Veröffentlichung |
|---|---|---|---|
| US 5599510 A | 04-02-1997 | KEINE | |
| WO 2015077490 A1 | 28-05-2015 | US 2015137412 A1 | 21-05-2015 |
| | | WO 2015077490 A1 | 28-05-2015 |
| WO 02063230 A1 | 15-08-2002 | BR 0207108 A | 27-01-2004 |
| | | CA 2435737 A1 | 18-01-2005 |
| | | CN 1491342 A | 21-04-2004 |
| | | EP 1358441 A1 | 05-11-2003 |
| | | JP 5068415 B2 | 07-11-2012 |
| | | JP 2004525891 A | 26-08-2004 |
| | | KR 20030072623 A | 15-09-2003 |
| | | TW 592831 B | 21-06-2004 |
| | | US 2002106316 A1 | 08-08-2002 |
| | | WO 02063230 A1 | 15-08-2002 |
| WO 2009081175 A1 | 02-07-2009 | AU 2008339634 A1 | 02-07-2009 |
| | | BR PI0821525 A2 | 16-06-2015 |
| | | CA 2708821 A1 | 02-07-2009 |
| | | CN 101932379 A | 29-12-2010 |
| | | DK 2227325 T3 | 30-06-2014 |
| | | EA 201070797 A1 | 30-12-2010 |
| | | EP 2227325 A1 | 15-09-2010 |
| | | JP 5571573 B2 | 13-08-2014 |
| | | JP 2011508043 A | 10-03-2011 |
| | | KR 20100101158 A | 16-09-2010 |
| | | MY 157456 A | 15-06-2016 |
| | | US 2010324158 A1 | 23-12-2010 |
| | | WO 2009081175 A1 | 02-07-2009 |
| | | ZA 201004401 B | 31-08-2011 |
| US 4101287 A | 18-07-1978 | KEINE | |
| US 2016194563 A1 | 07-07-2016 | AU 2009302276 A1 | 15-04-2010 |
| | | CA 2739325 A1 | 15-04-2010 |
| | | CN 102245289 A | 16-11-2011 |
| | | EP 2346964 A2 | 27-07-2011 |
| | | JP 5715568 B2 | 07-05-2015 |
| | | JP 2012514658 A | 28-06-2012 |
| | | JP 2015108142 A | 11-06-2015 |
| | | JP 2017048397 A | 09-03-2017 |
| | | JP 2019059945 A | 18-04-2019 |
| | | US 2010174124 A1 | 08-07-2010 |
| | | US 2014291204 A1 | 02-10-2014 |
| | | US 2016194563 A1 | 07-07-2016 |
| | | WO 2010042794 A2 | 15-04-2010 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 18 18 6079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2019

| Im Recherchenbericht angeführtes Patentdokument | Datum der Veröffentlichung | Mitglied(er) der Patentfamilie | Datum der Veröffentlichung |
|---|---|---|---|
| | | ZA    201102680 B | 27-06-2012 |

Für nähere Einzelheiten zu diesem Anhang : siehe Amtsblatt des Europäischen Patentamts, Nr.12/82

Seite 2 von 2

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009106232 A1